# NEUE EUROPÄISCHE PATENTSCHRIFT

(11) **EP 2 852 738 B2**
(45) Veröffentlichungstag und Bekanntmachung des Hinweises auf die Entscheidung über den Einspruch: **09.10.2019**
(45) Hinweis auf die Patenterteilung: 13.07.2016
(21) Anmeldenummer: 13725297.9
(22) Anmeldetag: 13.05.2013
(51) Int. Cl.: F01N 3/28, F01N 13/18, B23P 15/00

(54) **ABGASNACHBEHANDLUNGSEINRICHTUNG UND ZUGEHÖRIGES HERSTELLUNGSVERFAHREN**
EXHAUST-GAS AFTERTREATMENT DEVICE AND ASSOCIATED PRODUCTION METHOD
DISPOSITIF DE RETRAITEMENT DE GAZ D'ÉCHAPPEMENT ET PROCÉDÉ DE FABRICATION ASSOCIÉ

(30) Priorität: 21.05.2012 DE 102012208449
(43) Veröffentlichungstag der Anmeldung: 01.04.2015
(73) Patentinhaber: Eberspächer Exhaust Technology GmbH & Co. KG, 66539 Neunkirchen (DE)
(72) Erfinder: WIRTH, Georg, 73230 Kirchheim/Teck (DE); MÜLLER, Bernd, 66740 Saarlouis (DE)
(74) Vertreter: BRP Renaud & Partner mbB Rechtsanwälte Patentanwälte Steuerberater
(86) Internationale Anmeldenummer: PCT/EP2013/059783
(87) Internationale Veröffentlichungsnummer: WO 2013/174668

(56) Entgegenhaltungen:
- EP-A1- 1 722 081
- EP-A2- 1 074 704
- DE-A1- 19 919 580
- JP-A- 2002 097 944
- JP-B2- 4 122 772
- US-A- 4 148 120
- US-B1- 6 737 027

## Beschreibung

Die vorliegende Erfindung betrifft ein Verfahren zum Herstellen einer Abgasnachbehandlungseinrichtung, mit den Merkmalen des Oberbegriffs des Anspruchs 1. Die Erfindung betrifft außerdem eine Abgasnachbehandlungseinrichtung für eine Abgasanlage einer Brennkraftmaschine, die insbesondere in einem Kraftfahrzeug angeordnet sein kann.

Ein gattungsgemäßes Verfahren ist aus der EP 1 722 081 A1 bekannt.

Abgasnachbehandlungseinrichtungen, wie zum Beispiel Katalysatoren und Partikelfilter, können zumindest einen Monolithen zur Abgasnachbehandlung aufweisen, der in einem Gehäuse mit Hilfe einer den Monolithen in der Umfangsrichtung umschließenden Lagermatte gehalten ist. Derartige Monolithen lassen sich vergleichsweise preiswert aus keramischen Materialien herstellen. Keramische Materialien zeichnen sich durch eine hohe Temperaturbeständigkeit aus. Allerdings sind keramische Materialien vergleichsweise spröde und weisen einen thermischen Ausdehnungskoeffizienten auf, der sich von den thermischen Ausdehnungskoeffizienten von Metallen, die üblicherweise zur Herstellung des Gehäuses verwendet werden, signifikant unterscheidet. Die Lagermatte dient somit zum einen zum Schutz des Monolithen vor Spannungsspitzen. Zum anderen muss die Lagermatte elastisch reversibel verformbar sein, um thermisch bedingte Dehnungseffekte kompensieren zu können. Des Weiteren kann die Lagermatte auch Vibrationen und Schwingungen dämpfen, um hierdurch die Belastung des Monolithen zu reduzieren. Ein weiteres Problem bei der Verwendung keramischer Monolithen ist herstellungsbedingt. Während das metallische Gehäuse mit vergleichsweise engen Formtoleranzen hergestellt werden kann, sind die Formtoleranzen zur Herstellung keramischer Monolithen deutlich größer. Auch die Lagermatten können, insbesondere von Los zu Los, variierende Geometrien bzw. Dichten besitzen. Um den jeweiligen Monolithen mit Hilfe der jeweiligen Lagermatte im Gehäuse ausreichend fest fixieren zu können, muss jedoch eine vorbestimmte Vorspannkraft realisiert werden, mit welcher die Lagermatte in einem Ringspalt, der sich radial zwischen dem Monolithen und einem Mantel des Gehäuses einstellt, verpresst werden kann. Ist die Verpressung zu schwach, kann sich im Betrieb der Monolith relativ zum Gehäuse axial bewegen. Ferner können die aggressiven heißen Abgase im Betrieb der Abgasnachbehandlungseinrichtung die Lagermatte angreifen und destabilisieren. Ist dagegen die Verpressung zu stark, kann die Lagermatte die thermischen Dehnungseffekte nicht mehr elastisch aufnehmen, wodurch ebenfalls die Lebensdauer der Lagerung bzw. der Halterung des Monolithen im Gehäuse stark beeinträchtigt ist. Außerdem können dann am Monolithen die zulässigen Spannungen überschritten werden, wodurch auch die Gefahr einer Beschädigung des Monolithen entsteht. Zur Lösung dieser Probleme ist es üblich, die Gehäuse hinsichtlich ihrer Abmessungen individuell an den jeweiligen Monolithen anzupassen, um eine gewünschte Spaltbreite radial zwischen dem Monolithen und dem Mantel des Gehäuses bereitzustellen. Die vorbestimmte radiale Spaltbreite führt dann im montierten Zustand zu einer vorbestimmten radialen Verpressung der Lagermatte, so dass die Lagermatte ihre Funktionen optimal erfüllen kann.

Die Anpassung des Gehäuses an die Abmessungen des jeweiligen Monolithen kann vor dem Einsetzen des Monolithen mit der Lagermatte in den Mantel des Gehäuses erfolgen, so genanntes "Pre-Sizing". Das Pre-Sizing lässt sich zum einen dadurch realisieren, dass eine Auswahl von Gehäusen mit variierenden Abmessungen vorgehalten wird, so dass abhängig vom jeweiligen Monolithen ein hinsichtlich seiner Abmessungen geeignetes Gehäuse ausgewählt und verbaut werden kann. Zum anderen ist es möglich, nur eine Gehäusegröße zu bevorraten, die auf den innerhalb des Toleranzbereichs größten Monolithen abgestimmt ist. Da dieses Standard-Gehäuse dann für die meisten Monolithen zu groß ist, muss vor dem Einsetzen des Monolithen in den Mantel des Gehäuses eine Querschnittsreduzierung durchgeführt werden, was mit Hilfe entsprechender Werkzeuge möglich ist. Beim Pre-Sizing gestaltet sich das Einbringen des Monolithen mit der Lagermatte in das Gehäuse vergleichsweise aufwändig, da beim axialen Einführen vergleichsweise große Scherrkräfte an der Lagermatte angreifen, wobei es zu Beschädigungen der Lagermatte kommen kann.

Alternativ zum Pre-Sizing kann auch ein so genanntes "Post-Sizing" durchgeführt werden, bei dem der Monolith mit der Lagermatte in einen vergleichsweise groß dimensionierten Mantel eines Standard-Gehäuses axial eingeführt wird und bei dem anschließend, also bei in den Mantel eingesetztem und von der Lagermatte umhülltem Monolithen, eine Querschnittsreduzierung durchgeführt wird, um die Abmessungen des Mantels bzw. des Gehäuses individuell an die Abmessungen des jeweiligen Monolithen anzupassen. Die Querschnittsreduzierung zum Anpassen der Abmessungen des Gehäuses an die individuellen Abmessungen des jeweiligen Monolithen kann auch als "Kalibrieren" des Gehäuses bezeichnet werden, und zwar sowohl beim Pre-Sizing als auch beim Post-Sizing.

Das Gehäuse besteht üblicherweise aus besagtem Mantel, der den jeweiligen Monolithen mit der Lagermatte in der Umfangsrichtung umschließt, sowie zwei stirnseitig des Mantels angeordneten Trichtern. Üblicherweise sind der Mantel und die beiden Trichter separate Bauteile, so dass das Gehäuse durch Anbauen der beiden Trichter an den Mantel zusammengebaut werden muss. Dabei muss zumindest einer der Trichter nach dem Einsetzen des Monolithen an den Mantel angebaut werden. Üblicherweise kann dabei der jeweilige Trichter mit einem zylindrischen Anschlussabschnitt mit dem zylindrischen Mantel gesteckt werden; entweder wird der Trichter mit seinem Anschlussabschnitt auf den Mantel aufgesteckt oder in den Mantel eingesteckt. Zweckmäßig werden Mantel und Trichter mittels einer in der Umfangsrichtung geschlossen umlaufenden Schweißnaht aneinander befestigt.

Da der Mantel durch das Kalibrieren variierende Querschnitte besitzen kann, ergeben sich für das Anbauen der Trichter weitere Probleme, da Standard-Trichter in der Regel zu groß sind und Schweißnähte zum Ausgleich der Abmessungen vergleichsweise instabil sind. Zur Reduzierung dieser Probleme ist es grundsätzlich möglich, auch die Trichter zu kalibrieren, so dass dann kalibrierte Trichter mit dem kalibrierten Mantel gesteckt werden können. Durch diese Maßnahme lässt sich ein Radialspiel zwischen dem jeweiligen stirnseitigen Endbereich des Mantels und dem diesen axial überlappenden Anschlussabschnitt des jeweiligen Trichters reduzieren. Somit lassen sich die erforderlichen Schweißnähte kleiner konfigurieren, was deren Festigkeit begünstigt.

Bei modernen Abgasanlagen, insbesondere bei kleineren Kraftfahrzeugen, besteht häufig der Wunsch, die jeweilige Abgasnachbehandlungseinrichtung in der Axialrichtung möglichst kompakt zu bauen. Dies kann dadurch erreicht werden, dass innerhalb des Gehäuses der Axialabstand zwischen dem Monolithen und den Trichtern möglichst klein gewählt wird. Eine weitere Reduzierung der Abmessungen lässt sich nur dadurch erzielen, dass sich der jeweilige Steckbereich, in dem der Mantel und der jeweilige Trichter ineinander gesteckt sind, mit einem axialen Endbereich des Monolithen axial überlappt. Hierdurch entstehen jedoch neue Probleme, da dann bei eingestecktem Trichter der jeweilige Anschlussabschnitt des Trichters axial in den Ringspalt zwischen Monolith und Mantel eindringt, was den für die Lagermatte zur Verfügung stehenden Einbauraum beeinträchtigt. Bei aufgestecktem Trichter wird dagegen ein Axialbereich des Mantels, in dem das erforderliche Kalibrieren durchgeführt werden kann, reduziert. Insgesamt besteht somit die Gefahr, dass die Lagermatte ihre Haltefunktion nicht mehr optimal erfüllen kann.

Die vorliegende Erfindung beschäftigt sich mit dem Problem, für eine Abgasnachbehandlungseinrichtung der eingangs genannten Art bzw. für ein zugehöriges Herstellungsverfahren eine verbesserte Ausführungsform anzugeben, die sich insbesondere dadurch auszeichnet, dass sich eine axial kompakte Bauform bei ausreichender Haltefunktion der Lagermatte realisieren lässt.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Abgasnachbehandlungseinrichtung nach dem Post-Sizing-Prinzip herzustellen und das Kalibrieren bei mit dem Mantel gesteckten Trichtern durchzuführen, wobei die Trichter in ihren Anschlussabschnitten axial mit dem Mantel so weit gesteckt sind, dass der jeweilige Anschlussabschnitt des jeweiligen Trichters einen axialen Endabschnitt der Lagermatte axial überlappt. Beim Kalibrieren wird dann der Mantel über seine gesamte axiale Länge einschließlich seiner Endbereiche, mit denen die Trichter gesteckt sind, kalibriert, also einer Querschnittsreduzierung unterzogen. Die Querschnittsreduzierung wird somit sowohl in den Anschlussabschnitten, in denen eine zweilagige Konfiguration aus koaxial angeordneten Trichter und Mantel vorliegt, als auch in einem Lagerbereich durchgeführt, der sich von dem einen Anschlussabschnitt bis zum anderen Anschlussabschnitt axial erstreckt und in dem eine einlagige Konfiguration vorliegt, die nur durch den Mantel gebildet ist. Durch das gemeinsame Kalibrieren von Mantel und gestecktem Trichter vereinfacht sich die Logistik, da nur eine Standard-Größe für den Mantel und die Trichter bevorratet werden muss. Gleichzeitig wird durch das gemeinsame Kalibrieren ein Radialspalt zwischen dem Anschlussabschnitt des jeweiligen Trichters und dem dazu koaxial angeordneten Endabschnitt des Mantels eliminiert, so dass Trichter und Mantel radial spielfrei ineinander gesteckt sind. Hierdurch vereinfacht sich die Realisierung einer hinreichend stabilen Schweißnaht, da diese an keiner Stelle einen Radialspalt überbrücken muss. Des Weiteren hat sich gezeigt, dass die axiale Überlappung des jeweiligen Anschlussabschnitts mit der Lagermatte weniger nachteilig ist als erwartet. Insbesondere ist die Abdichtung der Lagermatte gegenüber dem Abgas nicht beeinträchtigt. Insgesamt lässt sich durch die axiale Überlappung des jeweiligen Anschlussabschnitts des jeweiligen Trichters mit einem axialen Endbereich der Lagermatte und somit auch des Mantels und des Monolithen an der jeweiligen axialen Stirnseite eine in der Axialrichtung extrem kurze bzw. kompakte Bauform für die Abgasnachbehandlungseinrichtung realisieren.

Entsprechend einer vorteilhaften Ausführungsform kann das Kalibrieren so durchgeführt werden, dass die Querschnittsreduzierung im Lagerbereich und in den Anschlussabschnitten gleich groß ist. Das heißt, dass der Mantel einschließlich der Endbereiche mit den gesteckten Anschlussabschnitten der Trichter über seine gesamte axiale Länge nach dem Kalibrieren einen konstanten Außenquerschnitt aufweist. Hierdurch gestaltet sich der Kalibriervorgang besonders einfach. Insbesondere lässt sich hierzu ein herkömmliches Kalibrierwerkzeug verwenden. Da in den stirnseitigen Endabschnitten des Mantels durch die gesteckten Anschlussabschnitte der Trichter eine Doppelwand vorliegt, ergibt sich bei dieser Konfiguration im Bereich der axialen Überlappung mit der Lagermatte eine verstärkte radiale Verpressung der Lagermatte. Insbesondere wird in den Anschlussabschnitten die Lagermatte um die Wandstärke der Wandabschnitte stärker verpresst als im Lagerbereich, zumindest dann, wenn die Lagermatte ihrerseits in der Axialrichtung eine konstante Wandstärke aufweist.

Gemäß einer vorteilhaften Weiterbildung kann nun vorgesehen sein, die Lagermatte im jeweiligen Überlappungsbereich mit einer reduzierten Wandstärke und/oder mit einer reduzierten Dichte zu konfigurieren. Insbesondere kann die Lagermatte im jeweiligen Überlappungsbereich eine Ringstufe oder eine Axialnut aufweisen, die hinsichtlich ihrer Geometrie vorzugsweise auf die Wandstärke des jeweiligen Anschlussabschnitts abgestimmt sein kann. Auf diese Weise kann über die gesamte axiale Erstreckung der Lagermatte eine weitgehend homogene Verpressung realisiert werden, auch wenn in den Überlappungsbereichen der Radialspalt kleiner ist als im Lagerbereich.

Bei einer anderen Ausführungsform kann das Kalibrieren dagegen so durchgeführt werden, dass die Querschnittsreduzierung im Lagerbereich größer ist als in den Anschlussabschnitten. Das heißt, dass nach dem Kalibrieren der Außenquerschnitt des Mantels über die gesamte axiale Länge des Lagerbereichs konstant ist und in den mit den Anschlussbehältern der Trichter gesteckten Endbereichen größer ist als im Lagerbereich, also gestuft ist bzw. eine Stufe umfasst. Mit anderen Worten, hierbei wird die Wandverdopplung in den Überlappungsbereichen berücksichtigt, wodurch es insbesondere möglich ist, für den Radialspalt über die gesamte axiale Länge der Lagermatte eine weitgehend konstante Spaltbreite zu realisieren. Somit lässt sich eine homogene Verpressung der Lagermatte über die gesamte axiale Länge realisieren. Dies gilt insbesondere dann, wenn die Querschnittsreduzierung im Lagebereich um die Wandstärke des jeweiligen Anschlussabschnitts größer ist als im jeweiligen Anschlussabschnitt.

Um eine derartige entlang des Mantels inhomogene Querschnittsreduzierung zu realisieren, ist ein spezielles Kalibrierwerkzeug von Vorteil, das eine komplementär zur Außenkontur des Mantels geformte Drücckontur zum Aufbringen von den Querschnitt des Mantels reduzierenden Druckkräften aufweist. Dieses Kalibrierwerkzeug ist dabei so ausgestaltet, dass seine Drücckontur im Bereich der Anschlussabschnitte jeweils eine Stufe aufweist, die einen Rücksprung repräsentiert. Vorzugsweise ist die Abmessung der Stufe in radialer Richtung auf die Wandstärke des jeweiligen Anschlussabschnitts abgestimmt. Die inhomogene Querschnittsreduzierung führt beim fertigen Gehäuse zu einem Außenquerschnitt, der in den Überlappungsbereichen größer ist als im Lagerbereich.

Gemäß einer vorteilhaften Ausführungsform werden die Trichter im Kalibrierwerkzeug relativ zum Mantel axial fixiert, um ein axiales Ausweichen der Trichter beim Kalibrieren zu vermeiden. Zusätzlich oder alternativ kann vorgesehen sein, die Trichter nach dem Zusammenbauen und vor dem Kalibrieren am Mantel zu befestigen. Eine derartige Befestigung kann beispielsweise mittels eines oder mehrerer Schweißpunkte oder mittels einer (vorläufigen) Schweißnaht realisiert werden. Auch hierdurch lassen sich die Trichter für das Kalibrieren am Mantel fixieren.

Vorzugsweise werden die Trichter nach dem Kalibrieren jeweils durch wenigstens eine geschlossene umlaufende (endgültige) Schweißnaht am Mantel befestigt. Da die Trichter gemeinsam mit dem Mantel kalibriert werden, sind die Trichter mit dem Mantel radial spielfrei gesteckt, wodurch die jeweilige Schweißnaht vergleichsweise klein realisiert werden kann. Hierdurch erhält die jeweilige Schweißnaht eine besonders hohe Dauerfestigkeit.

Gemäß einer Weiterbildung des Verfahrens kann vorgesehen sein, dass vor dem Zusammenbauen des Gehäuses der wenigstens eine Monolith und/oder die wenigstens eine Lagermatte vermessen werden, um für das Kalibrieren benötigte Parameter zu bestimmen. Das Kalibrieren wird dann abhängig von den zuvor bestimmten Parametern durchgeführt. Derartige Parameter sind beispielsweise die Querschnittsgeometrie des Monolithen und die Dicke und/oder Dichte der Lagermatte.

Eine erfindungsgemäße Abgasnachbehandlungseinrichtung charakterisiert sich somit dadurch, dass der Mantel zusammen mit den gesteckten Anschlussabschnitten durch Umformung von einem Anfangsquerschnitt auf einen Endquerschnitt reduziert worden ist, derart, dass der Mantel und die Trichter radial spielfrei ineinander stecken. Eine Querschnittsreduzierung durch Umformung lässt sich im Gefüge des Mantels und der Trichter nachweisen. Ebenso lässt sich anhand von Mikrostrukturen, die sich beim Umformen an den aneinander anliegenden Kontaktflächen von Trichter und Mantel ausbilden, nachweisen, dass Mantel und Trichter gemeinsam umgeformt wurden.

Besonders vorteilhaft ist eine Weiterbildung, bei welcher der Mantel und die Anschlussabschnitte der Trichter radial gegeneinander vorgespannt sind. Eine derartige radiale Vorspannung lässt sich dadurch erzielen, dass beim Umformen zur Querschnittsreduzierung innerhalb des Steckbereichs das jeweils radial innenliegende Bauteil stärker verformt wird. Da jede plastische Umformung auch mit einer elastischen Umformung einhergeht, kann das nach dem Umformen auftretende Entspannen der umgeformten Bauteile dazu führen, dass sich das innenliegende Bauteil theoretisch stärker entspannen kann als das außenliegende Bauteil, praktisch aber vom außenliegenden Bauteil daran gehindert wird, wodurch die gewünschte radiale Vorspannung zwischen dem Mantel und dem jeweiligen Anschlussabschnitt entsteht.

Gemäß einer anderen Ausführungsform kann der Mantel zumindest an einem axialen Endbereich eine Stufe aufweisen, in welcher der jeweilige Anschlussabschnitt die Lagermatte überlappt. Eine derartige Konfiguration ergibt sich durch die vorstehend beschriebene inhomogene Querschnittsreduzierung.

Alternativ ist auch eine Ausführungsform denkbar, bei welcher die Lagermatte zumindest in einem axialen Endbereich des Mantels im jeweiligen Überlappungsbereich radial stärker verpresst ist als in einem sich von dem einen Anschlussabschnitt zum anderen Anschlussabschnitt erstreckenden Lagerbereich. Eine derartige Konstellation kann sich insbesondere dann ergeben, wenn die vorstehend beschriebene homogene Querschnittsreduzierung durchgeführt wird.

Zweckmäßig besitzen beide Endbereiche eine derartige Stufe oder die Lagermatte ist in beiden Überlappungsbereichen stärker verpresst als im Lagebereich. Grundsätzlich ist jedoch auch eine kombinierte Bauform denkbar, bei welcher in dem einen Endbereich eine Stufe vorhanden ist, während im anderen Endbereich eine verstärkte Verpressung vorgesehen ist.

Ein Kalibrierwerkzeug wird zum Kalibrieren eines Gehäuses einer derartigen Abgasnachbehandlungseinrichtung benutzt. Ein derartiges Kalibrierwerkzeug charakterisiert sich dabei durch eine Drückkontur zum Aufbringen von den Querschnitt des Mantels reduzierenden Druckkräften, wobei diese Drückkontur im Bereich der Anschlussabschnitte jeweils eine Stufe aufweist, die insbesondere die Wandstärke des jeweiligen Anschlussabschnitts berücksichtigt.

Für das Verfahren, für die Abgasnachbehandlungseinrichtung und für das Kalibrierwerkzeug spielt es dabei keine Rolle, welche Geometrie der Querschnitt des Monolithen sowie der Querschnitt des Mantels aufweisen. Üblich sind vor allem runde Querschnitte beispielsweise mit kreisförmiger, ovaler oder elliptischer Geometrie. Alternativ finden aber auch eckige Querschnitte Anwendung, z.B. mit rechteckiger, sechseckiger oder dreieckiger Geometrie. Es ist klar, dass die eckigen Querschnitte in ihren Ecken entsprechend abgerundet ausgeführt sein können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte Prinzipdarstellung einer Abgasanlage im Bereich einer Abgasnachbehandlungseinrichtung,
- Fig. 2: eine auseinander gezogene Darstellung der Abgasnachbehandlungseinrichtung,
- Fig. 3: eine Stirnansicht (a) und eine Seitenansicht (b) eines Monolithen mit Lagermatte,
- Fig. 4: eine auseinander gezogene Darstellung der Abgasnachbehandlungseinrichtung während der Montage,
- Fig. 5: eine Seitenansicht der montierten Abgasnachbehandlungseinrichtung,
- Fig. 6: ein stark vereinfachter Längsschnitt der Abgasnachbehandlungseinrichtung im Bereich eines Trichters vor dem Kalibrieren (a) und nach dem Kalibrieren (b),
- Fig. 7-9: Ansichten wie in Fig. 6, jedoch bei anderen Ausführungsformen,
- Fig. 10: ein Längsschnitt der Abgasnachbehandlungseinrichtung in einem axialen Endbereich, ohne Trichter, bei einer speziellen Ausführungsform des Mantels,
- Fig. 11 und 12: weitere Ausführungsformen des Mantels im Längsschnitt,
- Fig. 13, 14: verschiedene Ausführungsformen für einen doppelwandigen Trichter.

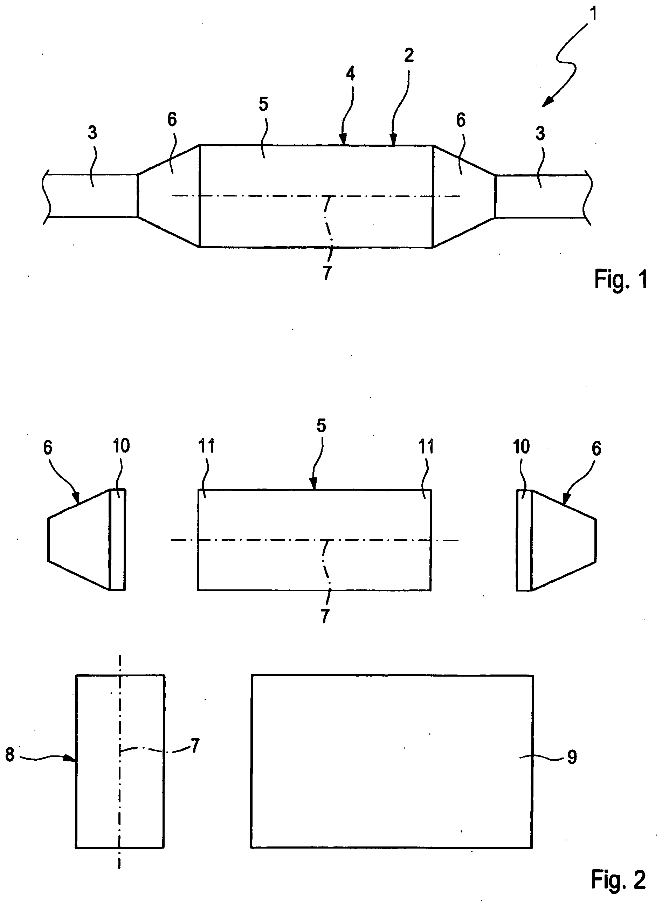

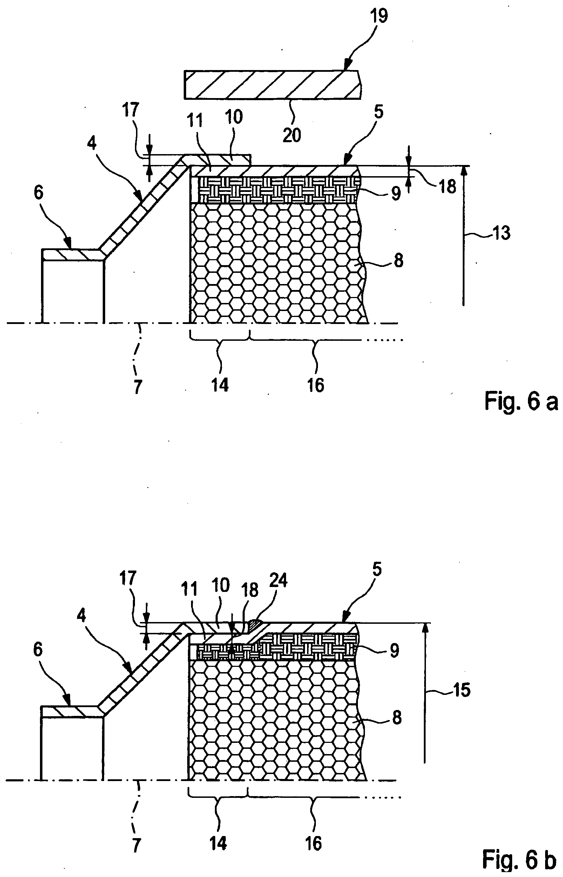

Entsprechend Figur 1 umfasst eine Abgasanlage 1 zum Abführen von Abgasen einer hier nicht gezeigten Brennkraftmaschine, die insbesondere in einem Kraftfahrzeug angeordnet sein kann, zumindest eine Abgasnachbehandlungseinrichtung 2, die in eine Abgasleitung 3 der Abgasanlage 1 eingebunden ist. Die Abgasnachbehandlungseinrichtung 2 besitzt ein Gehäuse 4, das einen Mantel 5 und zwei stirnseitige Trichter 6 aufweist. Der Mantel 5 ist dabei in einer Umfangsrichtung geschlossen, die sich auf eine Längsrichtung oder Axialrichtung 7 des Gehäuses 4 bezieht. In den Halbschnitten der Figuren 6 bis 10 repräsentiert die Längsachse 7 gleichzeitig eine Längsmittelachse, in welcher eine Symmetrieebene liegt.

Wie sich den Figuren 2 bis 4 entnehmen lässt, bilden der Mantel 5 und die Trichter 6 separate Bauteile, die zum Gehäuse 4 zusammengebaut werden müssen. Das Gehäuse 4 dient zur Unterbringung zumindest eines Monolithen 8 sowie wenigstens einer Lagermatte 9, die im zusammengebauten Zustand den Monolithen 8 in der Umfangsrichtung umschließt.

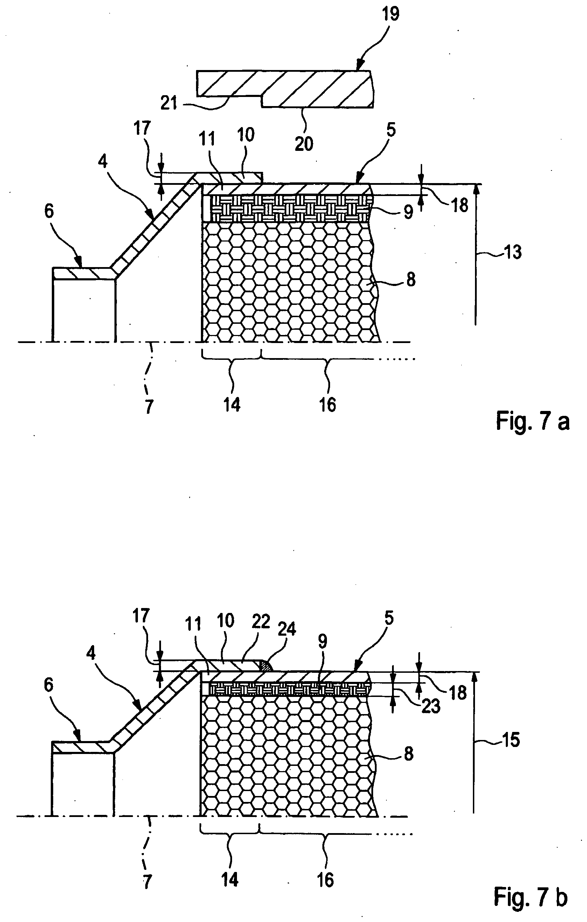

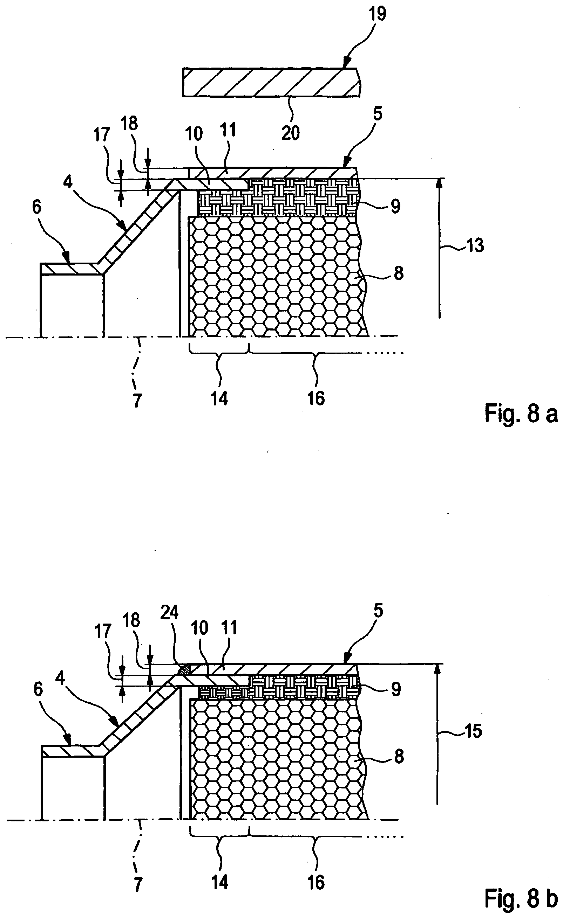

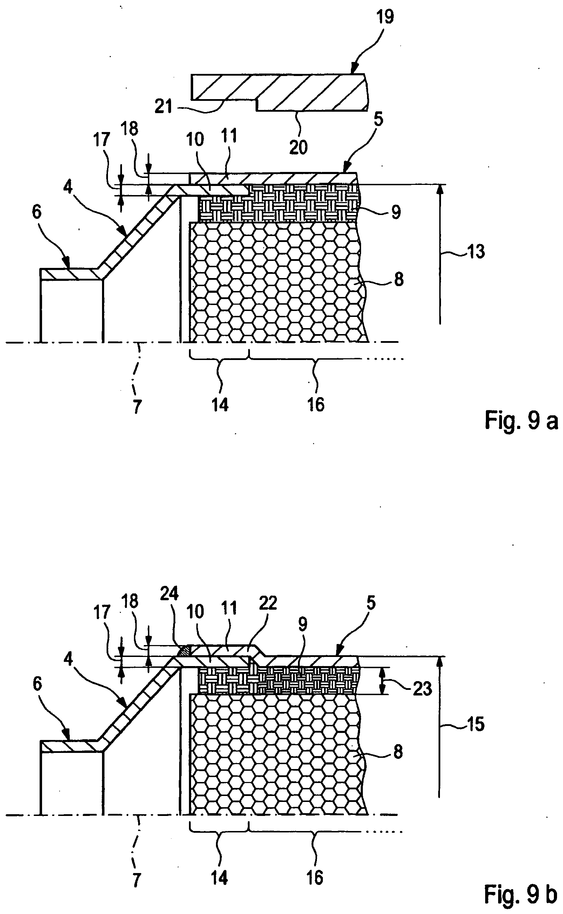

In Figur 2 ist der Monolith 8 gegenüber dem Gehäuse 5 senkrecht verdreht, was an den beiden um 90° zueinander verlaufenden Längsachsen 7 erkennbar ist. Die Lagermatte 9 ist im abgerollten Ausgangszustand wiedergegeben. Der jeweilige Trichter 6 besitzt einen dem Mantel 5 zugewandten Anschlussabschnitt 10, der komplementär zum Mantel 5 geformt ist, derart, dass der jeweilige Trichter 6 mit dem Mantel 5 steckbar ist. Insbesondere besitzt der Mantel 5 einen zylindrischen Querschnitt. Komplementär dazu besitzen dann auch die Anschlussabschnitte 10 jeweils einen derartigen zylindrischen Querschnitt. Die Trichter 6 sind in den jeweiligen stirnseitigen, axialen Endbereich 11 des Mantels 5 einsteckbar, was bei den Ausführungsformen der Figuren 8 und 9 dargestellt ist, oder auf den Mantel 5 aufsteckbar, was in den Varianten der Figuren 6 und 7 dargestellt ist. Auch eine gemischte Bauweise ist denkbar, bei welcher der eine Trichter 6 in den Mantel 5 eingesteckt ist, während der andere Trichter 6 auf den Mantel 5 aufgesteckt ist.

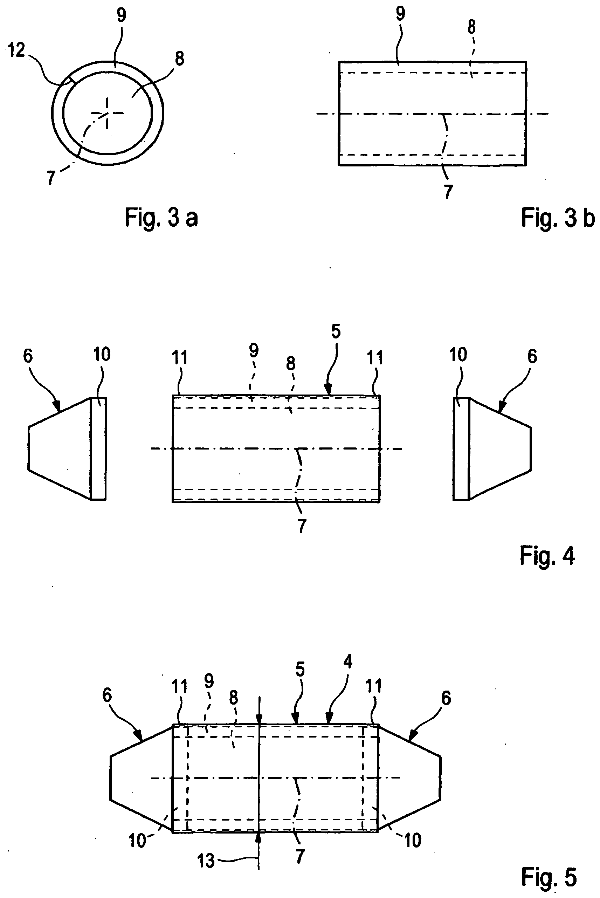

Für den Zusammenbau der Abgasnachbehandlungseinrichtung 1 bzw. für das Zusammenbauen und Befüllen des Gehäuses 4 wird zunächst der jeweilige Monolith 8 gemäß den Figuren 3a und 3b mit der jeweiligen Lagermatte 9 versehen, so dass die Lagermatte 9 den Monolithen 8 in der Umfangsrichtung umschließt. Ein entsprechender Umfangsstoß der Lagermatte 9 ist in Figur 3a mit 12 bezeichnet. Anschließend wird der Monolith 8 zusammen mit der Lagermatte 9 in den Mantel 5 axial eingesteckt. Anschließend werden die Trichter 6 an den Mantel 5 gesteckt, was in Figur 4 angedeutet ist. Anschließend liegt der in Figur 5 gezeigte Zustand des Gehäuses 4 vor, in dem der Mantel 5 einen Anfangsaußenquerschnitt 13 aufweist. Anschließend wird ein Kalibrieren des Gehäuses 4 durchgeführt, was nachfolgend anhand der Figuren 6 bis 9 näher erläutert wird.

Gemäß den Figuren 6 bis 9 wird der jeweilige Trichter 6 mit seinem Anschlussabschnitt 10 so weit auf den Mantel 5 aufgesteckt bzw. in den Mantel 5 eingesteckt, dass sich der jeweilige Anschlussabschnitt 10 und ein axialer Endabschnitt 14 der Lagermatte 9 axial überlappen. Somit baut das Gehäuse 4 und somit die Abgasnachbehandlungseinrichtung 2 in der Axialrichtung 7 extrem kurz.

Beim Kalibrieren wird nun der Mantel 5 einschließlich der Endbereiche 11, in denen die Anschlussabschnitte 10 der Trichter 6 liegen, ausgehend von dem Anfangsquerschnitt 13 auf einen Endquerschnitt 15 reduziert, derart, dass zumindest in einem Lagerbereich 16 in der Lagermatte 9 eine vorbestimmte radiale Vorspannung zum Halten des Monolithen 8 im Mantel 5 erzeugt wird. Die Radialrichtung steht dabei senkrecht auf der Längsmittelachse 7. Der Lagerbereich 16 erstreckt sich axial von dem einen Anschlussabschnitt 10 des einen Trichters 6 bis zum anderen Anschlussabschnitt 10 des anderen Trichters 6, also zwischen den Endabschnitten 11.

Bei den Ausführungsformen der Figuren 6 und 8 erfolgt das Kalibrieren derart, dass die Querschnittsreduzierung im Lagerbereich 16 und in den Anschlussbereichen 14 etwa gleich groß ist. In der Folge ergibt sich über die gesamte axiale Länge des Mantels 5 einschließlich der Anschlussabschnitte 10 ein konstanter Außenquerschnitt, nämlich der Endquerschnitt 15. Da sich in den Endabschnitten 11 eine Wandstärke 17 des jeweiligen Anschlussabschnitts 10 zu einer Wandstärke 18 des Mantels 5 hinzuaddiert, ergibt sich im Überlappungsbereich 14 der Lagermatte 9 eine entsprechend größere radiale Verpressung. Mit anderen Worten, bei dieser Vorgehensweise ist die Lagermatte 9 im Überlappungsbereich 14 mit dem jeweiligen Anschlussabschnitt 10 stärker verpresst als im Lagebereich 16.

In den Figuren 6a und 8a ist ein Kalibrierwerkzeug 19 angedeutet, das eine Drückkontur 20 aufweist. Diese Drückkontur 20 ist dabei komplementär zur Außenkontur des Mantels 5 geformt und dient zum Aufbringen von den Querschnitt des Mantels 5 reduzierenden Druckkräften.

Bei den Ausführungsformen der Figuren 7 und 9 erfolgt das Kalibrieren derart, dass die Querschnittsreduzierung im Lagerbereich 16 größer ist als in den Anschlussabschnitten 10. Hierzu kann das zuvor genannte Kalibrierwerkzeug 19 in seiner Drückkontur 20 im Bereich des jeweiligen Anschlussabschnitts 10 eine Stufe 21 aufweisen, die zweckmäßig in radialer Richtung etwa gleich groß dimensioniert ist wie die Wandstärke 17 des Anschlussabschnitts 10. Beim Umformen ergibt sich dann ein inhomogener Außenkonturverlauf, wie er beispielsweise in Figur 7b und 9b erkennbar ist. In diesen Fällen besitzt das Gehäuse 4 am jeweiligen axialen Endbereich 11 des Mantels 5 eine Stufe 22, die bei der aufgesteckten Variante gemäß Figur 7b durch den Anschlussabschnitt 10 des jeweiligen Trichters 6 gebildet ist und die bei der eingesteckten Variante gemäß Figur 9b durch einen abgekröpften Endbereich 11 des Mantels 5 gebildet ist.

Die jeweilige Stufe 21 des Kalibrierwerkzeugs 19 berücksichtigt zweckmäßig die Wandstärke 17 des Anschlussabschnitts 17, derart, dass sich nach dem Kalibrieren innerhalb der Lagermatte 9 entlang der gesamten axialen Länge der Lagermatte 9 eine im Wesentlichen homogene radiale Verpressung einstellt. Erkennbar ist bei den Ausführungsformen der Figuren 7b und 9b ein Radialspalt 23 über die gesamte axiale Länge des Monolithen 8 gleich groß, wobei besagter Radialspalt 23 radial zwischen dem Monolithen 8 und dem Mantel 5 vorliegt. In diesem Radialspalt 23 ist die Lagermatte 9 verpresst. Bemerkenswert ist, dass bei den Ausführungsformen der Figuren 7b und 9b der Radialspalt 23 im Lagerbereich 16 etwa gleich groß ist wie in dem jeweiligen Überlappungsbereich 14.

Nach dem Kalibrieren kann der jeweilige Trichter 6 durch wenigstens eine geschlossen umlaufende Schweißnaht 24 am Mantel 5 befestigt werden.

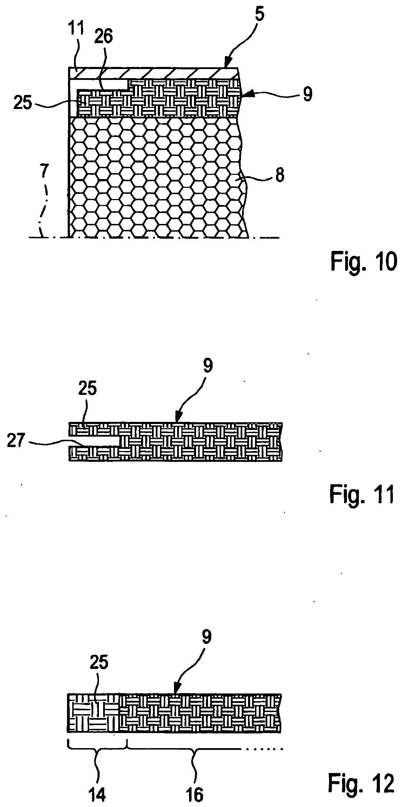

Figur 10 zeigt eine Ausführungsform, bei welcher die Lagermatte 9 in ihrem axialen Endbereich 25 eine Ringstufe 26 aufweist. Die Ringstufe 26 kann beispielsweise das in Figur 9a gezeigte axiale Einstecken des Anschlussabschnitts 10 in den Endabschnitt 11 des Mantels 5 vereinfachen. Grundsätzlich eignet sich eine derartige gestufte Ausführungsform auch für die Variante mit aufgestecktem Trichter 6, da durch die gestufte Gestaltung der Lagermatte 9 in ihrem Endabschnitt 25 die radiale Verpressung reduziert werden kann, selbst wenn gemäß Figur 6b oder gemäß Figur 8b nach dem Kalibrieren im Überlappungsbereich 14 der Radialspalt 23 kleiner ist als im Lagerbereich 16. Bei der in Figur 10 gezeigten Ausführungsform ist die Stufe 26 radial außen im Endbereich 25 der Lagermatte 9 ausgeformt. Somit eignet sich diese Ausführungsform in besonderer Weise für einen eingesteckten Trichter 6 gemäß die Figuren 9a und 9b. Alternativ kann die Stufe 26 auch radial innen an der Lagermatte 9 ausgeformt sein. Denkbar ist auch eine Variante mit zwei Stufen 26, wobei dann die eine Ringstufe radial außen angeordnet ist, während die andere Ringstufe dann radial innen angeordnet ist.

Figur 11 zeigt eine Ausführungsform der Lagermatte 9, bei der anstelle einer solchen Stufe 26 eine axial offene Nut 27 in den Endbereich 25 der Lagermatte 9 eingearbeitet ist, um die radiale Verpressung zu reduzieren. Während bei den Ausführungsformen der Figuren 10 und 11 die Lagermatte 9 insgesamt eine homogene Dichte besitzt, zeigt Figur 12 eine Ausführungsform, bei der im Endbereich 25 eine reduzierte Dichte realisiert ist. Die im späteren Überlappungsbereich 14 vorgesehene reduzierte Dichte ist dabei gezielt so auf die relativ dazu höhere Dichte des Lagerbereichs 16 abgestimmt, dass sich nach dem Verformen im Lagerbereich 16 und im Überlappungsbereich 14 im Wesentlichen dieselben Vorspannungskräfte realisieren lassen, obwohl die Verpressung im Überlappungsbereich 14 um die Wandstärke 17 des Anschlussabschnitts 10 stärker ausfällt.

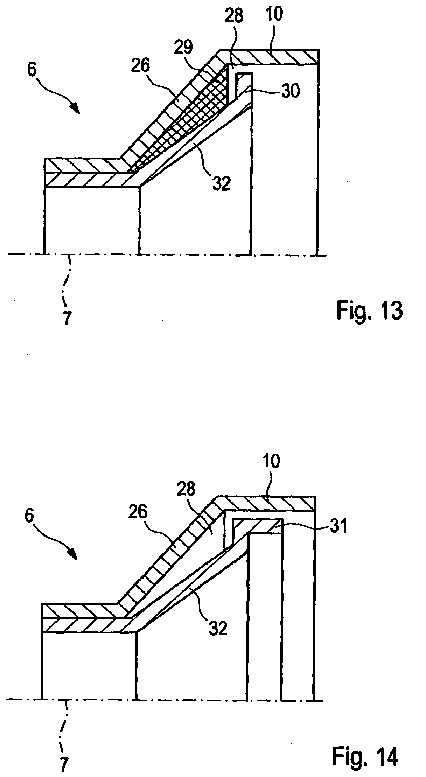

Obwohl in den Figuren 6 bis 9 der jeweilige Trichter 6 als einwandiger Trichter 6 dargestellt ist, kann gemäß den Figuren 13 und 14 auch ein zweiwandiger Trichter 6 vorgesehen sein. Der jeweilige zweiwandige Trichter 6 besitzt dann einen Außentrichter 26 sowie einen darin konzentrisch angeordneten Innentrichter 32. Der Außentrichter 26 besitzt den Anschlussabschnitt 10 zum Aufstecken bzw. Einstecken am Mantel 5. Der Innentrichter 32 ist zumindest im jeweiligen konischen Bereich des Trichters 6 vom Außentrichter 26 radial beabstandet, um so einen Ringspalt 28 auszubilden, der zu einer Ringspaltisolation bzw. Luftspaltisolation führt. Gemäß Figur 13 kann im Ringspalt 28 ein thermisch isolierendes Isolationsmaterial 29 angeordnet sein.

Bei der in Figur 13 gezeigten Ausführungsform ist der Innentrichter 32 an seinem den Monolithen 8 zugewandten Ende mit einem radial abstehenden Kragen 30 ausgestattet, der zweckmäßig so dimensioniert ist, dass dieser ringförmige Kragen 30 nach dem Kalibrieren den Ringraum 23 an einer axialen Stirnseite der Lagermatte 9 abdeckt und somit vor der unmittelbaren Beaufschlagung mit heißem Abgas schützt. Im Unterschied dazu zeigt Figur 14 eine Ausführungsform, bei welcher das dem Monolithen 8 zugewandte Ende des Innentrichters 32 einen axial abstehenden Kragen 31 aufweist, der nach dem Kalibrieren in den Ringraum 23 eintaucht, um diesen weitgehend zu verschließen. Auf diese Weise kann ebenfalls ein effizienter Schutz der Lagermatte 9 vor Abgas erreicht werden.

## Patentansprüche

1. Verfahren zum Herstellen einer Abgasnachbehandlungseinrichtung (2), die in einem Gehäuse (4), das aus einem in Umfangsrichtung geschlossenen Mantel (5) und zwei stirnseitigen Trichtern (6) zusammengebaut ist, zumindest einen Monolithen (8) zur Abgasnachbehandlung aufweist, mit folgenden Schritten:
A: Zusammenbauen und Befüllen des Gehäuses (4),
wozu der wenigstens eine Monolith (8) zusammen mit wenigstens einer den wenigstens einen Monolithen (8) in der Umfangsrichtung umschließenden Lagermatte (9) in den Mantel (5) axial eingesetzt wird, und
wozu die Trichter (6) jeweils mit einem komplementär zum Querschnitt des Mantels (5) geformten axialen Anschlussabschnitt (10) in den Mantel (5) eingesteckt oder auf den Mantel (5) aufgesteckt werden,
wobei das Stecken der Trichter (6) derart erfolgt, dass sich der jeweilige Anschlussabschnitt (10) und ein axialer Endabschnitt (25) der Lagermatte (9) axial überlappen,
B: Kalibrieren des Gehäuses,
wozu der Mantel (5) einschließlich der Anschlussabschnitte (10) der Trichter (6) ausgehend von einem Anfangsquerschnitt (13) auf einen Endquerschnitt (15) reduziert wird, um in der wenigstens einen Lagermatte (9) zumindest in einem sich von dem einen Anschlussabschnitt (10) zum anderen Anschlussabschnitt (10) erstreckenden Lagerbereich (16) eine vorbestimmte radiale Vorspannung zum Halten des wenigstens einen Monolithen (8) im Mantel (5) zu erzeugen,
wobei nach dem Kalibrieren der Mantel (5) und die Anschlussabschnitte (10) der Trichter (6) radial spielfrei ineinander stecken und aneinander anliegen.

2. Verfahren nach Anspruch 1,
**dadurch gekennzeichnet,**
**dass** das Kalibrieren so durchgeführt wird, dass der Außenquerschnitt des Mantels (5) einschließlich der mit den Anschlussabschnitten (10) gesteckten Endbereiche (11) über die gesamte axiale Länge des Mantels (5) konstant ist.

3. Verfahren nach Anspruch 2,
**dadurch gekennzeichnet,**
**dass** die Lagermatte (9) im jeweiligen Überlappungsbereich (14) eine reduzierte Wandstärke und/oder eine reduzierte Dichte aufweist.

4. Verfahren nach Anspruch 1,
**dadurch gekennzeichnet,**
**dass** das Kalibrieren so durchgeführt wird, dass der Außenquerschnitt des Mantels (5) über die ganze axiale Länge des Lagerbereichs (16) konstant ist und in den mit den Anschlussabschnitten (10) gesteckten Endbereichen (11) eine Stufe (22) aufweist.

5. Verfahren nach Anspruch 4,
**dadurch gekennzeichnet,**
**dass** die Querschnittsreduzierung im Lagerbereich (16) um die Wandstärke (17) des jeweiligen Anschlussabschnitts (10) größer ist als im Anschlussabschnitt (10).

6. Verfahren nach Anspruch 4 oder 6,
**dadurch gekennzeichnet,**
**dass** das Kalibrieren mit einem Kalibrierwerkzeug (19) durchgeführt wird, das eine komplementär zur Außenkontur des Mantels (5) geformte Drückkontur (20) zum Aufbringen von den Querschnitt des Mantels (5) reduzierenden Druckkräften aufweist, die im Bereich der Anschlussabschnitte (10) jeweils eine Stufe (21) aufweist.

7. Verfahren nach einem der Ansprüche 1 bis 6,
**dadurch gekennzeichnet,**
**dass** die Trichter (6) nach dem Zusammenbauen und vor dem Kalibrieren am Mantel (5) befestigt werden.

8. Verfahren nach einem der Ansprüche 1 bis 7,
**dadurch gekennzeichnet,**
**dass** die Trichter (6) nach dem Kalibrieren jeweils durch wenigstens eine geschlossen umlaufende Schweißnaht (24) am Mantel (5) befestigt werden.

9. Verfahren nach einem der Ansprüche 1 bis 8,
**dadurch gekennzeichnet,**
**dass** vor dem Zusammenbauen des Gehäuses (4) der wenigstens eine Monolith (8) und/oder die wenigstens eine Lagermatte (9) vermessen werden, um für das Kalibrieren benötigte Parameter zu bestimmen,
**dass** das Kalibrieren abhängig von den zuvor bestimmten Parametern durchgeführt wird.

10. Abgasnachbehandlungseinrichtung für eine Abgasanlage (1) einer Brennkraftmaschine,
- mit einem Gehäuse (4), das einen in Umfangsrichtung geschlossenen Mantel (5) und zwei stirnseitig an dem Mantel (5) angebaute Trichter (6) aufweist,
- mit mindestens einem Monolithen (8) zur Abgasnachbehandlung, der mit wenigstens einer Lagermatte (9) in der Umfangsrichtung umhüllt ist und im Mantel (5) angeordnet ist,
- wobei der jeweilige Trichter (6) mit einem axialen Anschlussabschnitt (10) in den Mantel (5) eingesteckt oder auf den Mantel (5) aufgesteckt ist, derart, dass sich die Lagermatte (9) und der jeweilige Anschlussabschnitt (10) axial überlappen,
- wobei der Mantel (5) zusammen mit den auf- bzw. eingesteckten Anschlussabschnitten (10) durch Umformung von einem Anfangsquerschnitt (13) auf einen Endquerschnitt (15) reduziert worden ist, derart, dass der Mantel (5) und die Anschlussabschnitte (10) der Trichter (6) radial spielfrei ineinander stecken und aneinander anliegen.

11. Einrichtung nach Anspruch 9,
**dadurch gekennzeichnet,**
**dass** der Mantel (5) und die Anschlussabschnitte (10) radial gegeneinander vorgespannt sind.

12. Einrichtung nach Anspruch 10 oder 11,
**dadurch gekennzeichnet,**
**dass** das Gehäuse (4) zumindest an einem axialen Endbereich (11) des Mantels (5) eine Stufe (22) aufweist, in welcher der jeweilige Anschlussabschnitt (10) die Lagermatte (9) überlappt.

13. Einrichtung nach Anspruch 10 oder 11,
**dadurch gekennzeichnet,**
**dass** die Lagermatte (9) zumindest in einem axialen Endbereich (11) des Mantels (5) im jeweiligen Überlappungsbereich (14) radial stärker verpresst ist als in einem sich von dem einen Axialabschnitt (10) zum anderen Axialabschnitt (10) erstreckenden Lagerbereich (16).

14. Kalibrierwerkzeug zum Kalibrieren eines Gehäuses (4) einer Abgasnachbehandlungseinrichtung (2), mit einer komplementär zur Außenkontur des Mantels (5) geformten Drückkontur (20) zum Aufbringen von den Querschnitt des Mantels (5) reduzierenden Druckkräften, die im Bereich der Anschlussabschnitte (10) jeweils eine Stufe (21) aufweist, **gekennzeichnet durch** eine Verwendung des Kalibrierwerkzeugs (19) beim Herstellen einer Abgasnachbehandlungseinrichtung (2) nach einem der Ansprüche 10 bis 13.

## Claims

1. A method for producing an exhaust gas aftertreatment device (2), which in a housing (4), which is assembled of a jacket (5) closed in circumferential direction and two face end funnels (6), comprises at least one monolith (8) for the exhaust gas aftertreatment with the following steps:
A: assembling and filling the housing (4),
for the purpose of which the at least one monolith (8) together with at least one bearing mat (9) enclosing the at least one monolith (8) in the circumferential direction is axially inserted in the jacket (5), and
for the purpose of which the funnels (6) are each plugged into the jacket (5) or plugged onto the jacket (5) with an axial connecting section (10) which is formed complementarily to the cross section of the jacket (5),
wherein the plugging of the funnels (6) is carried out in such a manner that the respective connecting section (10) and an axial end section (25) of the bearing mat (9) axially overlap,
B: calibrating the housing,
for the purpose of which the jacket (5) including the connecting sections (10) the funnel (6) starting out from an initial cross section (13) is reduced to a final cross section (15) in order to create in the at least one bearing mat (9) at least in a bearing region (16) extending from the one connecting section (10) to the other connecting section (10) a predetermined radial preload for retaining the at least one monolith (8) in the jacket (5),
wherein after the calibration the jacket (5) and the connecting sections (10) of the funnels (6) are plugged into one another radially free of play and abut against each other.

2. The method according to Claim 1, **characterized in that** calibrating is carried out so that the outer cross section of the jacket (5) including the end regions (11) plugged with the connecting sections (10) is constant over the entire axial length of the jacket (5).

3. The method according to Claim 2, **characterized in that** the bearing mat (9) in the respective overlap region (14) has a reduced wall thickness and/or a reduced density.

4. The method according to Claim 1, **characterized in that** calibrating is carried out so that the outer cross section of the jacket (5) is constant over the entire axial length of the bearing region (16) and comprises a step (22) in the end regions (11) which are plugged with the connecting sections (10).

5. The method according to Claim 4, **characterized in that** the cross-sectional reduction in the bearing region (16) is greater by the wall thickness (17) of the respective connecting section (10) than in the connecting section (10).

6. The method according to Claim 4 or 6, **characterized in that** calibrating is carried out with a calibrating tool (19), which comprises a pushing contour (20) formed complementarily to the outer contour of the jacket (5) for applying pressure forces reducing the cross section of the jacket (5), which in the region of the connecting sections (10) has a step (21) each.

7. The method according to any one of the Claims 1 to 6, **characterized in that** the funnels (6) are fastened to the jacket (5) after assembling and before calibrating.

8. The method according to any one of the Claims 1 to 7, **characterized in that** the funnels (6) after calibrating are each fastened to the jacket (5) through at least one closed circumferential weld seam (24).

9. The method according to any one of the Claims 1 to 8, **characterized in that** before assembling the housing (4) the at least one monolith (8) and/or the at least one bearing mat (9) are/is measured in order to determine parameters required for calibrating, **in that** calibrating is carried out dependent on the previously determined parameters.

10. An exhaust gas aftertreatment device for an exhaust system (1) of an internal combustion engine,
- with a housing (4) which comprises a jacket (5) which is closed in circumferential direction and two funnels (6) which are attached to the jacket (5) at the face end,
- with at least one monolith (8) for the exhaust gas aftertreatment, which is enveloped by at least one bearing mat (9) in the circumferential direction and arranged in the jacket (5),
- wherein the respective funnel (6) with the axial connecting section (10) is plugged into the jacket (5) or plugged onto the jacket (5) in such a manner that the bearing mat (9) and the respective connecting section (10) axially overlap,
- wherein the jacket (5) together with the plugged on or plugged in connecting sections (10) has been reduced from an initial cross section (13) to a final cross section (15) through forming in such a manner that the jacket (5) and the connecting sections (10) of the funnels (6) are plugged into one another radially free of play and abut against each other.

11. The device according to Claim 9, **characterized in that** the jacket (5) and the connecting sections (10) are radially preloaded relative to one another.

12. The device according to Claim 10 or 11, **characterized in that** the housing (4) has a step (22) at least on an axial end region (11) of the jacket (5) in which the respective connecting section (10) overlaps the bearing mat (9).

13. The device according to Claim 10 or 11, **characterized in that** the bearing mat (9) at least in an axial end region (11) of the jacket (5) is radially more strongly compressed in the respective overlap region (14) than in a bearing region (16) extending from the one axial section (10) to the other axial section (10).

14. A calibrating tool for calibrating a housing (4) of an exhaust gas aftertreatment device (2), with a pushing contour (20) formed complementarily to the outer contour of the jacket (5) for applying pressure forces reducing the cross section of the jacket (5), which in the region of the connecting sections (10) comprises a step (21) each, **characterized by** a use of the calibrating tool (19) at the manufacturing of an exhaust gas aftertreatment device (2) according to any one of the claims 10 to 13.

## Revendications

1. Procédé servant à fabriquer un dispositif de post-traitement de gaz d'échappement (2), qui présente dans un boîtier (4), qui est composé d'une gaine (5) fermée dans la direction périphérique et de deux entonnoirs (6) côté frontal, au moins un monolithe (8) servant au post-traitement de gaz d'échappement, comprenant des étapes qui suivent consistant à :
A : assembler et remplir le boîtier (4),
le monolithe (8) au moins au nombre de un étant à cet effet inséré de manière axiale dans la gaine (5) conjointement avec au moins un mat de support (9) entourant le monolithe (8) au moins au nombre de un dans la direction périphérique, et
les entonnoirs (6) étant à cet effet respectivement emboîtés dans la gaine (5) ou enfilés sur la gaine (5) respectivement par une section de raccordement (10) axiale formée de manière complémentaire à la section transversale de la gaine (5),
dans lequel l'enfichage des entonnoirs (6) est réalisé de telle manière que la section de raccordement (10) respective et une section d'extrémité (25) du mat de support (9) se chevauchent de manière axiale,
B : calibrer le boîtier,
la gaine (5), y compris les sections de raccordement (10) des entonnoirs (6), étant réduite sur une section transversale d'extrémité (15) en partant d'une section transversale de départ (13) afin de générer, dans le mat de support (9) au moins au nombre de un, au moins dans une zone de support (16) s'étendant depuis l'une des sections de raccordement (10) vers l'autre section de raccordement (10), une précontrainte radiale prédéterminée servant à maintenir le monolithe (8) au moins au nombre de un dans la gaine (5),
dans lequel après le calibrage, la gaine (5) et les sections de raccordement (10) des entonnoirs (6) s'emboîtent les unes dans les autres et se superposent les unes les autres de manière radiale sans jeu.

2. Procédé selon la revendication 1,
**caractérisé en ce**
**que** le calibrage est effectué de telle sorte que la section transversale extérieure de la gaine (5), y compris les zones d'extrémité (11) enfichées avec les sections de raccordement (10), est constante sur toute la longueur axiale de la gaine (5).

3. Procédé selon la revendication 2,
**caractérisé en ce**
**que** le mat de support (9) présente, dans la zone de chevauchement (14) respective, une épaisseur de paroi réduite et/ou une densité réduite.

4. Procédé selon la revendication 1,
**caractérisé en ce**
**que** le calibrage est effectué de telle sorte que la section transversale extérieure de la gaine (5) est constante sur toute la longueur axiale de la zone de support (16) et présente, dans les zones d'extrémité (11) enfichées avec les sections de raccordement (10), un palier (22).

5. Procédé selon la revendication 4,
**caractérisé en ce**
**que** la réduction de section transversale dans la zone de support (16) dépasse celle dans la section de raccordement (10) de l'épaisseur de paroi (17) de la section de raccordement (10) respective.

6. Procédé selon la revendication 4 ou 6,
**caractérisé en ce**
**que** le calibrage est effectué avec un outil de calibrage (19), qui présente un contour de pression (20) formé de manière complémentaire au contour extérieur de la gaine (5), servant à appliquer des forces de pression réduisant la section transversale de la gaine (5), lequel contour de pression présente, dans la zone des sections de raccordement (10), respectivement un palier (21).

7. Procédé selon l'une quelconque des revendications 1 à 6,
**caractérisé en ce que**
les entonnoirs (6) sont fixés après l'assemblage et avant le calibrage au niveau de la gaine (5).

8. Procédé selon l'une quelconque des revendications 1 à 7,
**caractérisé en ce**
**que** les entonnoirs (6) sont fixés au niveau de la gaine (5) après le calibrage respectivement par au moins un cordon de soudure (24) périphérique fermé.

9. Procédé selon l'une quelconque des revendications 1 à 8,
**caractérisé en ce**
**qu'**avant l'assemblage du boîtier (4), le monolithe (8) au moins au nombre de un et/ou le mat de support (9) au moins au nombre de un sont mesurés afin de déterminer des paramètres requis pour le calibrage,
et en ce que le calibrage est effectué en fonction des paramètres déterminés au préalable.

10. Dispositif de post-traitement de gaz d'échappement pour une installation de gaz d'échappement (1) d'un moteur à combustion interne,
- comprenant un boîtier (4), qui présente une gaine (5) fermée dans la direction périphérique et deux entonnoirs (6) montés au niveau de la gaine (5) côté frontal,
- comprenant au moins un monolithe (8) servant au post-traitement de gaz d'échappement, lequel est enveloppé dans la direction périphérique d'au moins un mat de support (9) et est disposé dans la gaine (5),
- l'entonnoir (6) respectif étant emboîté dans la gaine (5) ou étant enfilé sur la gaine (5) par une section de raccordement (10) axiale de telle manière que le mat de support (9) et la section de raccordement (10) respective se chevauchent de manière axiale,
- la gaine (5) ayant été réduite, conjointement avec les sections de raccordement (10) enfilées ou emboîtées, sur une section transversale d'extrémité (15) par la mise en forme d'une section transversale de départ (13) de telle manière que la gaine (5) et les sections de raccordement (10) des entonnoirs (6) s'emboîtent les unes dans les autres et se superposent les unes les autres de manière radiale sans jeu.

11. Dispositif selon la revendication 9,
**caractérisé en ce**
**que** la gaine (5) et les sections de raccordement (10) sont précontraintes les unes contre les autres de manière radiale.

12. Dispositif selon la revendication 10 ou 11,
**caractérisé en ce**
**que** le boîtier (4) présente au moins au niveau d'une zone d'extrémité (11) axiale de la gaine (5), un palier (22), dans lequel la section de raccordement (10) respective chevauche le mat de support (9).

13. Dispositif selon la revendication 10 ou 11,
**caractérisé en ce**
**que** la compression radiale du mat de support (9) au moins dans une zone d'extrémité (11) axiale de la gaine (5) dans la zone de chevauchement (14) respective est plus forte que dans une zone de support (16) s'étendant depuis l'une des sections axiales (10) vers l'autre section axiale (10).

14. Outil de calibrage pour le calibrage d'un boîtier (4) d'un dispositif de post-traitement de gaz d'échappement (2) ayant un contour de pression (20) formé de manière complémentaire au contour extérieur de la gaine (5), servant à appliquer des forces de pression réduisant la section transversale de la gaine (5), lequel contour de pression présente respectivement un palier (21) dans la zone des sections de raccordement (10), **caractérisé par** une utilisation de l'outil de calibrage (19) lors de la fabrication d'un dispositif de post-traitement de gaz d'échappement (2) selon l'une quelconque des revendications 10 à 13.
